# EUROPEAN PATENT APPLICATION

(11) **EP 4 803 386 A1**
(43) Date of publication of application: **09.09.2026**
(21) Application number: 25161805.4
(22) Date of filing: 05.03.2025
(51) Int. Cl.: B60T 8/88, B60T 17/22, B60W 30/18, B60W 50/02, B60W 50/029

(54) **SYSTEM AND METHOD FOR SUPERVISING STOPPING SYSTEMS OF A VEHICLE**

(71) Applicant: Volvo Autonomous Solutions AB, 405 08 Göteborg (SE)
(72) Inventor: WIBERG, Wilhelm, 436 39 ASKIM (SE); BERGQUIST, Stefan, 417 27 GÖTEBORG (SE); JOHANSSON, Roy Tommy, 475 40 HÖNÖ (SE); HAGERSKANS, Jonas, 438 33 LANDVETTER (SE)
(74) Representative: Kransell & Wennborg KB

(57) **Abstract**

A computer system (100) comprising processing circuitry (102) configured to: in a vehicle (104) having a primary stopping system (106) comprising friction brakes (108) and a transmission control unit (110), and a secondary stopping system (112) comprising a parking brake system (114) and a propulsion inhibition system (116), obtain (200) data indicative of a fault in at least one of the primary stopping system and the secondary stopping system; in response to the fault being in a first predefined group of faults (202), perform a braking action using the transmission control unit and the parking brake system; in response to the fault being in a second predefined group of faults (204), perform a braking action using the parking brake system and the propulsion inhibition system; and in response to the fault being in a third predefined group of faults (206), perform a braking action using the friction brakes and the propulsion inhibition system.

## Description

### TECHNICAL FIELD

The disclosure relates generally to control of stopping systems in a vehicle. In particular aspects, the disclosure relates to stopping strategies for automated stopping in a vehicle comprising a primary and a secondary stopping system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Modem vehicles rely on various braking and propulsion control systems to ensure safe operation under different driving conditions. These systems are essential for maintaining vehicle stability, enabling controlled stops, and preventing unintended motion.

Braking systems generally include friction-based brakes, such as disc or drum brakes, which generate braking force through mechanical actuation. Additionally, propulsion control mechanisms can influence vehicle speed by regulating power delivery from the engine or disengaging the driveline. In many vehicles, these systems are electronically controlled and integrated with other vehicle subsystems to enhance performance, efficiency, and safety.

To improve reliability, many vehicles incorporate multiple braking and propulsion control systems, often operating in coordination. This allows for redundancy in case one system becomes impaired or operates at reduced effectiveness. However, ensuring proper coordination between these systems, maintaining their effectiveness over time, and addressing potential faults are ongoing challenges in vehicle design that require further development of efficient stopping strategies.

### SUMMARY

According to a first aspect of the disclosure, it is provided a computer system comprising processing circuitry configured to: in a vehicle having a primary stopping system comprising friction brakes and a transmission control unit, and a secondary stopping system comprising a parking brake system and a propulsion inhibition system, obtain data indicative of a fault in at least one of the primary stopping system and the secondary stopping system; in response to the fault being one of a group of faults included in a first predefined group of faults, perform a braking action using the transmission control unit of the primary stopping system and the parking brake system of the secondary stopping system; in response to the fault being one of a group of faults included in a second predefined group of faults, perform a braking action using the parking brake system and the propulsion inhibition system of the secondary stopping system; and in response to the fault being one of a group of faults included in a third predefined group of faults, perform a braking action using the friction brakes of the primary stopping system and the propulsion inhibition system of the secondary stopping system.

The first aspect of the disclosure may seek to improve the reliability and safety of vehicle stopping by dynamically selecting an appropriate braking action based on detected faults in a primary and a secondary stopping system. A technical benefit may include ensuring that a braking action is always performed using an available and functional stopping mechanism, even in cases where faults degrade or impair certain braking components. This allows the vehicle to maintain controlled stopping capability even in the presence of failures, reducing the likelihood of uncontrolled movement or insufficient deceleration.

By classifying faults into predefined groups and selecting an appropriate braking response, the system optimizes the use of braking resources, minimizing unnecessary activation of backup systems while ensuring they are engaged when required. It is also possible that the secondary braking system could have reduced performance. In the case of a parking brake system acting as a secondary system, reduced performance of the parking brake system can lead to reduced vehicle combination stability during an emergency braking action, which is unwanted under normal operation, but which can be seen as acceptable in a fallback scenario. The overall stopping strategy improves system longevity by reducing wear on secondary braking components while maintaining responsiveness to critical failures. Additionally, real-time fault detection and response may enhance operational efficiency by preventing unnecessary emergency stops, allowing for smoother transitions between braking systems.

As a result, the described system contributes to improved fault tolerance, enhanced vehicle safety, and a more robust braking control strategy, particularly in autonomous and semi-autonomous vehicles where fail-safe operation is crucial.

Optionally, in some examples, including in at least one preferred example, the data indicative of a fault in the primary stopping system includes at least one of: a system status of the primary stopping system, a degradation state of the primary stopping system, an overheating condition of the primary stopping system, and a sensor fault or communication loss associated with the primary stopping system. A technical benefit may include allowing the computer system to diagnose different types of faults affecting the primary stopping system using both direct system status reports and indirect performance indicators. By monitoring system status, the computer system can immediately detect when the primary stopping system is unavailable. Detecting degradation states enables the system to adjust braking strategies dynamically to prevent excessive strain on the braking components and to adjust the stopping strategy if a component of the primary stopping system is degraded. Monitoring overheating conditions prevents further brake damage by ensuring that braking force is not applied in a manner that could worsen the overheating state. Identifying sensor faults or communication losses provides an additional safety measure, ensuring that the system does not rely on unreliable or missing data when determining braking actions.

Optionally, in some examples, including in at least one preferred example, the data indicative of a fault in the secondary stopping system includes at least one of: a system status of the secondary stopping system, and a sensor fault or communication loss associated with the secondary stopping system. A technical benefit may include enabling the system to verify the availability and functionality of the secondary stopping system before relying on it for emergency braking. By obtaining the system status of the secondary stopping system, the computer system can ensure that the backup braking mechanisms are operational before engaging them. Detecting sensor faults or communication losses allows the system to recognize potential failures in relays, actuators, or pressure sensors, preventing situations where the secondary stopping system is assumed to be functional when it is not. This increases the robustness of the fault-handling process and ensures that the vehicle can still be stopped safely even if certain components of the secondary system are compromised.

Optionally, in some examples, including in at least one preferred example, a classification of the fault as being in the first predefined group of faults, the second predefined group of faults, or the third predefined group of faults is based on at least one predefined threshold value associated with a severity parameter of the fault, the severity parameter being selected from at least one of: a measured or estimated braking force deficiency; an estimated temperature of the friction brakes; a degree of pressure loss in the friction brakes; a degree of communication signal degradation between braking components; and a response time delay between a braking request and detected vehicle deceleration.

A technical benefit may include providing a quantifiable and structured method for classifying faults based on severity, allowing the system to determine the most appropriate braking response with greater accuracy. By using predefined threshold values for parameters such as braking force deficiency, temperature, pressure loss, and signal degradation, the system can assess whether a fault is minor, moderate, or critical. This enables a decision-making process ensuring that less severe faults do not trigger unnecessary emergency braking while still allowing immediate intervention for critical faults. Additionally, by including response time delay between a braking request and vehicle deceleration, the system can detect performance-related faults that might not be reported explicitly by individual braking components, enhancing overall safety and reliability.

Optionally, in some examples, including in at least one preferred example, the first predefined group of faults includes faults indicative of reduced or lacking functionality of the friction brakes of the primary stopping system and/or reduced or lacking functionality of the propulsion inhibition system of the secondary stopping system. A technical benefit may include ensuring that braking actions can still be performed even when the friction brakes of the primary stopping system are compromised. By incorporating faults related to the propulsion inhibition system of the secondary stopping system, the classification allows the system to determine whether an additional stopping force, such as the parking brake, is required to compensate for propulsion forces that cannot otherwise be controlled. This enhances braking reliability in cases where the friction brakes of the primary stopping system alone are insufficient to stop the vehicle.

Optionally, in some examples, including in at least one preferred example, the second predefined group of faults includes faults indicative of reduced or lacking functionality of the friction brakes of the primary stopping system and/or a fault in the transmission control unit of the primary stopping system. A technical benefit may include enabling the system to handle situations where both the braking capability and the drivetrain disengagement functionality are impaired. If the transmission control unit is faulty, the vehicle may be unable to declutch, which could lead to uncontrolled torque transmission. By recognizing this condition as a predefined fault category, the system can engage the parking brake system and the propulsion inhibition system of the secondary stopping system, ensuring that the vehicle can still be stopped effectively despite drivetrain malfunctions.

Optionally, in some examples, including in at least one preferred example, the third predefined group of faults includes faults indicative of a fault in the transmission control unit of the primary stopping system and/or a fault in the parking brake system of the secondary stopping system. A technical benefit may include improving fault management when both primary and secondary stopping mechanisms experience drivetrain or actuation failures. If the parking brake system is faulty, the secondary stopping system may not be available, and alternative braking mechanisms must be engaged. If the transmission control unit is faulty, propulsion forces may persist unless additional braking force is applied.

Optionally, in some examples, including in at least one preferred example, in response to detecting that the primary stopping system reports a system status indicating that external braking requests are not accepted due to insufficient air pressure, the processing circuitry is configured to activate the parking brake system of the secondary stopping system to bring the vehicle to a stop. A technical benefit may include ensuring that a vehicle can still be stopped safely even if the air pressure required for the primary braking system is unavailable. Air pressure loss is a known failure mode in air brake systems, and without an alternative stopping strategy, the vehicle may become uncontrollable. By automatically activating the parking brake system in response to such a failure, the system provides a fail-safe stopping mechanism that does not rely on air pressure. In a hydraulic brake system, the same approach can be used in response to detection of insufficient oil pressure.

Optionally, in some examples, including in at least one preferred example, in response to determining that the primary stopping system allows only reduced braking force due to an overheating condition of the friction brakes, the processing circuitry is configured to activate the propulsion inhibition system of the secondary stopping system if additional deceleration is required beyond the allowable braking force range. A technical benefit may include preventing excessive heat buildup in friction brakes by leveraging propulsion inhibition to assist in vehicle deceleration. Overheated brakes may result in brake fade, reducing their effectiveness and potentially leading to longer stopping distances. By detecting this condition and engaging the propulsion inhibition system, the system can reduce the demand on the friction brakes, allowing them to cool down while still ensuring sufficient deceleration.

Optionally, in some examples, including in at least one preferred example, in response to detecting a communication loss between a brake request unit and the primary stopping system, the processing circuitry is configured to: determine whether the vehicle is already decelerating, and in response to determining that no sufficient deceleration is detected within a predefined time period, activate the parking brake system of the secondary stopping system. A technical benefit may include providing a redundant braking mechanism in situations where communication failures prevent the primary stopping system from receiving braking requests. Instead of immediately triggering emergency braking upon communication loss, the system first checks whether the vehicle is decelerating as expected. This prevents unnecessary emergency stops caused by minor or temporary communication disruptions while still ensuring that the vehicle can be stopped safely if braking is actually compromised.

Optionally, in some examples, including in at least one preferred example, in response to detecting that a clutch position sensor of the transmission control unit is faulty and the transmission cannot disengage, the processing circuitry is configured to: activate the propulsion inhibition system of the secondary stopping system to cut power to the engine management system, and activate the parking brake system if the vehicle is still moving after a predefined time period. A technical benefit may include ensuring that a vehicle can be stopped even if the clutch fails to disengage or if a signal from a clutch detection sensor is compromised. If the transmission remains engaged, the engine may continue to drive the wheels, preventing effective braking. By cutting power to the engine management system, the system prevents further torque generation. If the vehicle is still moving, the system applies the parking brake as an additional stopping measure, ensuring that the vehicle comes to a complete stop.

Optionally, in some examples, including in at least one preferred example, in response to detecting a failure in the parking brake system of the secondary stopping system, the processing circuitry is configured to: determine whether the friction brakes of the primary stopping system are functional, and in response to determining that the friction brakes are functional, use the friction brakes and the propulsion inhibition system to stop the vehicle.

A technical benefit may include providing a backup stopping strategy when the secondary stopping system is unavailable. If the parking brake system is faulty, relying on it as an emergency braking mechanism could be ineffective. By evaluating the status of the friction brakes and utilizing propulsion inhibition as an alternative, the system ensures that an available and functional stopping method is selected, maintaining vehicle safety.

Optionally, in some examples, including in at least one preferred example, in response to detecting that the primary stopping system has applied a braking request but the resulting vehicle deceleration is below a predefined expected threshold, the processing circuitry is configured to: verify that the primary stopping system is actively applying brake force, and in response to determining that the applied brake force does not produce the expected deceleration, activate the secondary stopping system. A technical benefit may include detecting ineffective braking in real time and automatically compensating by engaging the secondary stopping system. This ensures that the vehicle does not continue moving uncontrollably if the primary stopping system fails to produce the expected braking force. By monitoring actual vehicle deceleration rather than relying solely on system status signals, the system provides an additional layer of safety, preventing unexpected stopping failures.

Optionally, in some examples, including in at least one preferred example, the propulsion inhibition system of the secondary stopping system is configured to cut power to an engine management system (EMS) by opening an electrical relay that requires an active signal to remain closed. A technical benefit may include ensuring that power to the engine is reliably cut in a fail-safe manner. By using an electrical relay that defaults to an open state in the absence of an active signal, the system ensures that propulsion inhibition will still occur even in cases where power loss or control signal failures occur. This prevents unintended vehicle acceleration and ensures a reliable stopping mechanism.

Optionally, in some examples, including in at least one preferred example, activating the parking brake system of the secondary stopping system comprises opening one or more park brake valves to evacuate air from a park brake circuit, thereby applying braking force to the vehicle. A technical benefit may include ensuring fail-safe activation of the parking brake system. Since the valves are designed to default to an open state when unpowered, this mechanism ensures that the parking brake will engage automatically in the event of a control failure or loss of air pressure. This improves passive safety and ensures that the vehicle can always be stopped, even if the primary control system malfunctions.

Optionally, in some examples, including in at least one preferred example, the processing circuitry is configured to obtain data indicative of a fault in at least one of the primary stopping system and the secondary stopping system in response to a braking request. A technical benefit may include ensuring that fault detection is directly linked to an actual braking demand, in combination with or as an alternative to continuously monitoring for faults that may not be immediately relevant. This improves system efficiency by focusing diagnostic efforts on critical moments when braking performance is required. By obtaining fault data at the time of a braking request, the system can immediately determine whether the requested braking action can be safely executed using the primary stopping system or if alternative braking measures need to be taken. Additionally, this approach reduces unnecessary system checks, minimizing processing overhead and communication bandwidth usage, while ensuring that faults affecting stopping capability are detected and addressed in real time.

According to a second aspect of the disclosure, it is provided a computer-implemented method, comprising: obtaining, by processing circuitry of a computer system, data indicative of a fault in at least one of a primary stopping system comprising friction brakes and a transmission control unit, and a secondary stopping system comprising a parking brake system and a propulsion inhibition system; classifying the fault into one of a plurality of predefined groups of faults based on a type of the fault; in response to the fault being classified in a first predefined group of faults, performing a braking action using the transmission control unit of the primary stopping system and the parking brake system of the secondary stopping system; in response to the fault being classified in a second predefined group of faults, performing a braking action using the parking brake system and the propulsion inhibition system of the secondary stopping system; and in response to the fault being classified in a third predefined group of faults, performing a braking action using the friction brakes of the primary stopping system and the propulsion inhibition system of the secondary stopping system.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
Fig. 1 is an exemplary system diagram of a computer system.
Fig. 2 is an exemplary block diagram illustrating functionality of a computer system.
Fig. 3 is an exemplary block diagram illustrating functionality of a computer system.
Fig. 4 is an exemplary block diagram illustrating functionality of a computer system.
Fig. 5 is an exemplary block diagram illustrating functionality of a computer system.
Fig. 6 is a flow chart of an exemplary computer-implemented method according to an example.
Fig. 7 is a vehicle comprising an exemplary computer system.

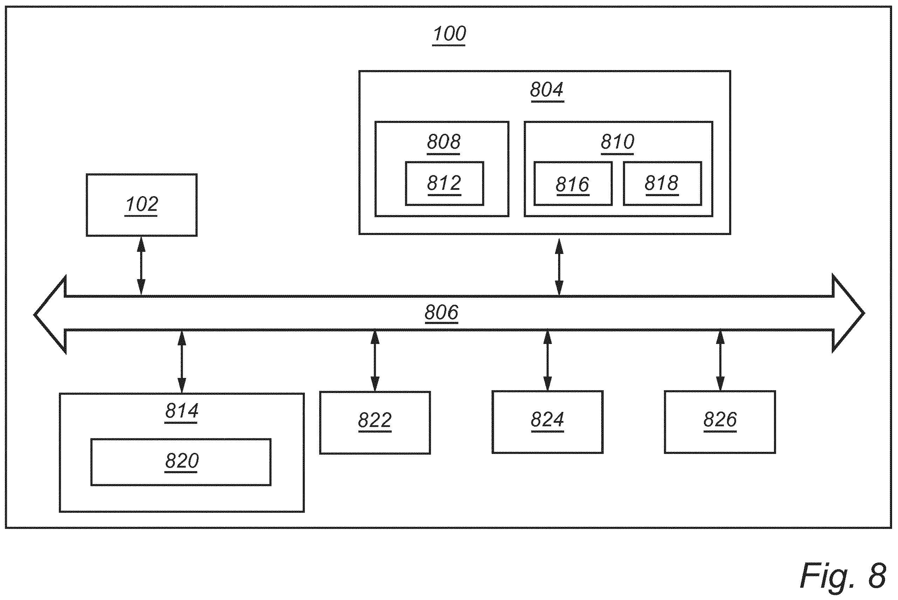

Fig. 8 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

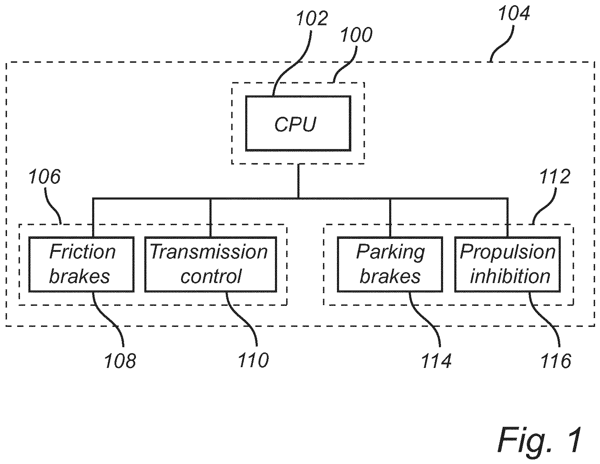

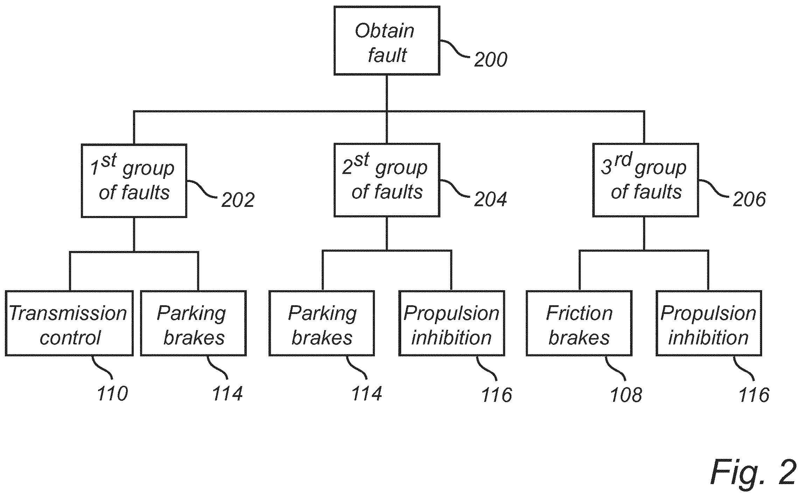

**FIG. 1** is an exemplary system diagram of a computer system 100 for a vehicle, and Fig. 2 is a schematic block diagram describing operations of the described computer system 100.

Fig. 1 illustrates a computer system 100 comprising processing circuitry 102 configured to control the stopping functionality of a vehicle 104 equipped with a primary stopping system 106 and a secondary stopping system 112. The primary stopping system 106 includes friction brakes 108 and a transmission control unit 110, while the secondary stopping system 112 includes a parking brake system 114 and a propulsion inhibition system 116. The computer system 100 is configured to obtain 200 data indicative of a fault in at least one of the primary stopping system 106 and the secondary stopping system 112, as shown in Fig. 2. The parking brake system 114 will in practice also exert a stopping force based on friction. In order to distinguish the brakes of the primary stopping system 106 from the parking brake system 114, the friction brakes 108 of primary stopping system 106 will be referred to as "friction brakes" and the brakes of the parking brake system 114 will be referred to as "parking brakes".

The data indicative of a fault may originate from self-diagnostic functions within the primary stopping system 106, which may report operational status over a communication protocol such as Controller Area Network (CAN) or Ethernet to the computer system 100. Additionally, fault data may be derived through supervision, where the expected reduction in speed upon actuation of the primary stopping system 106 is compared to actual vehicle behavior. If the reduction in speed is lower than expected, the computer system 100 may determine that a fault is present in the primary stopping system 106 and apply the secondary stopping system 112 accordingly.

The computer system 100 may classify detected faults into predefined groups based on severity and type. In response to determining that a fault belongs to a first predefined group of faults 202, the computer system 100 performs a braking action using the transmission control unit 110 of the primary stopping system 106 and the parking brake system 114 of the secondary stopping system 112. The first predefined group of faults 202 may include conditions where the friction brakes 108 are unavailable or degraded while propulsion inhibition remains functional, requiring the parking brake system 114 to compensate for the reduced braking capability.

If the fault is determined to belong to a second predefined group of faults 204, the computer system 100 performs a braking action using the parking brake system 114 and the propulsion inhibition system 116 of the secondary stopping system 112. The second predefined group of faults 204 may include situations where both the friction brakes 108 and the transmission control unit 110 are impaired, necessitating the use of the secondary stopping system 112 to ensure vehicle stoppage.

If the fault is determined to belong to a third predefined group of faults 206, the computer system 100 performs a braking action using the friction brakes 108 of the primary stopping system 106 and the propulsion inhibition system 116 of the secondary stopping system 112. The third predefined group of faults 206 may include scenarios where the transmission control unit 110 is faulty, preventing driveline disengagement, or where the parking brake system 114 is unavailable. In such cases, the propulsion inhibition system 116 ensures that engine power is cut off while the friction brakes 108 are used to bring the vehicle 104 to a stop.

Various types of fault conditions may trigger the classification into the first predefined group of faults 202, the second predefined group of faults 204, or the third predefined group of faults 206. A system status signal may indicate whether the primary stopping system 106 is capable of receiving braking requests, which may depend on factors such as air pressure availability for pneumatic braking, engine status, or the presence of active diagnostic faults. Degradation states may be detected when full braking force is unavailable, for example, when friction brakes 108 are restricted due to overheating or when engine braking is unavailable. Overheating conditions may be detected using temperature sensors monitoring friction brakes 108 or may be estimated by tracking the duration and intensity of braking events. Sensor faults or communication losses may be determined based on missing or erroneous data from components such as wheel speed sensors or the clutch position sensor in the transmission control unit 110.

If the system status of the primary stopping system 106 reports anything other than a fully operational state, the computer system 100 may determine that the primary stopping system 106 is impaired and activate the secondary stopping system 112 as needed. In cases where degradation is detected, braking requests beyond an allowable threshold may result in the secondary stopping system 112 supplementing the braking effort. Overheating detection may be used to adjust braking strategies, ensuring that friction brakes 108 are not excessively engaged when their temperature is above a predefined limit. Sensor faults and communication losses may trigger automatic switching to the secondary stopping system 112 to ensure braking capability is maintained despite potential missing or unreliable data.

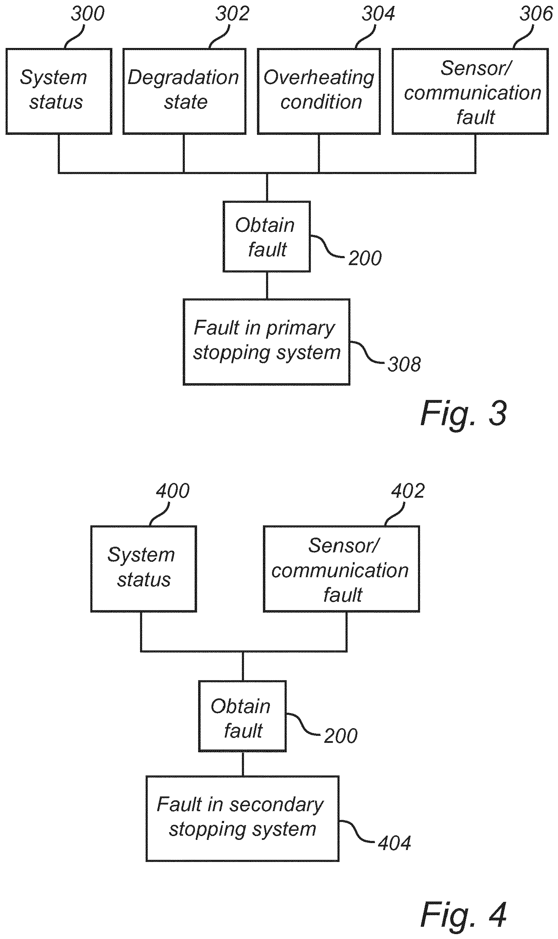

The computer system 100 is configured to obtain data indicative of a fault 200 in the primary stopping system 106, as illustrated in Fig. 3. The data may include at least one of a system status 300 of the primary stopping system 106, a degradation state 302 of the primary stopping system 106, an overheating condition 304 of the primary stopping system 106, and a sensor fault 306 or communication loss associated with the primary stopping system 106.

The system status 300 of the primary stopping system 106 provides an indication of whether the system is capable of receiving and executing braking requests. This status may be based on internal diagnostics or external dependencies such as the availability of air pressure for pneumatic brakes, the operational state of the engine, or the presence of active system faults. If the system status 300 indicates an issue, the computer system 100 may determine that the primary stopping system 106 is impaired and take appropriate measures to engage the secondary stopping system 112.

The degradation state 302 of the primary stopping system 106 indicates whether the braking capability is limited due to factors such as component wear, partial system failures, or restrictions imposed by other vehicle subsystems. For example, degradation may occur when the primary stopping system 106 allows only limited brake force application due to overheating concerns, or when engine braking is unavailable, leading to increased reliance on friction brakes 108. The computer system 100 may assess the degradation state 302 to determine whether additional stopping measures, such as engaging the secondary stopping system 112, are required to compensate for reduced braking performance.

The overheating condition 304 of the primary stopping system 106 may be detected based on temperature sensors monitoring the friction brakes 108 or may be estimated through calculations that consider the duration and intensity of braking events. If overheating is detected, the computer system 100 may adjust braking strategies to prevent further temperature buildup, such as limiting friction brake usage and relying more on propulsion inhibition via the secondary stopping system 112. Overheating detection ensures that the braking system remains effective while preventing excessive wear or failure due to sustained high temperatures.

A sensor fault 306 or communication loss may occur when critical data from braking system components is missing or unreliable. This may include failures in wheel speed sensors, loss of communication between the brake request unit and the primary stopping system 106, or a faulty clutch position sensor in the transmission control unit 110 that prevents proper disengagement. If a sensor fault 306 or communication loss is detected, the computer system 100 may assume that the primary stopping system 106 is unreliable and activate the secondary stopping system 112 to ensure the vehicle 104 can still be brought to a stop.

The computer system 100 determines that a fault 308 is present in the primary stopping system 106 if any of the described alternatives are detected, as illustrated in Fig. 3. Specifically, if the system status 300 indicates that braking requests cannot be processed, if the degradation state 302 reveals a reduction in braking capability, if the overheating condition 304 exceeds predefined safety thresholds, or if a sensor fault 306 or communication loss prevents accurate control of the braking system, the computer system 100 classifies the primary stopping system 106 as faulty. Upon detection of a fault 308, the computer system 100 may initiate corrective actions by adjusting braking strategies, activating the secondary stopping system 112, or implementing fail-safe measures to ensure vehicle stoppage.

By monitoring the system status 300, degradation state 302, overheating condition 304, and sensor fault 306 or communication loss, the computer system 100 ensures that faults in the primary stopping system 106 are accurately identified and appropriately managed, thereby improving vehicle safety and braking reliability.

The computer system 100 determines that a fault 308 is present in the primary stopping system 106 if any of the described alternatives are detected, as illustrated in Fig. 3. Specifically, if the system status 300 indicates that braking requests cannot be processed, if the degradation state 302 reveals a reduction in braking capability, if the overheating condition 304 exceeds predefined safety thresholds, or if a sensor fault 306 or communication loss prevents accurate control of the braking system, the computer system 100 classifies the primary stopping system 106 as faulty. Upon detection of a fault 308, the computer system 100 may initiate corrective actions by adjusting braking strategies, activating the secondary stopping system 112, or implementing fail-safe measures to ensure vehicle stoppage. By continuously monitoring the system status 300, degradation state 302, overheating condition 304, and sensor fault 306 or communication loss, the computer system 100 ensures that faults in the primary stopping system 106 are accurately identified and appropriately managed, thereby improving vehicle safety and braking reliability.

The computer system 100 is further configured to obtain data indicative of a fault 404 in the secondary stopping system 112, as illustrated in Fig. 4. The data may include at least one of a system status 400 of the secondary stopping system 112 and a sensor fault or communication loss 402 associated with the secondary stopping system 112. The system status 400 provides an indication of whether the secondary stopping system 112 is capable of executing braking actions when required. This status may depend on internal diagnostics, actuator availability, or communication with control units responsible for activating the parking brake system 114 and the propulsion inhibition system 116. If the system status 400 indicates an issue, the computer system 100 may determine that the secondary stopping system 112 is impaired and adjust braking strategies accordingly.

A sensor fault or communication loss 402 may occur when critical signals from the secondary stopping system 112 are missing or unreliable. This may include failures in position sensors monitoring the engagement state of the parking brake system 114, loss of communication with actuators controlling the propulsion inhibition system 116, or disruptions in signals required for verifying system functionality. If a sensor fault or communication loss 402 is detected, the computer system 100 may assume that the secondary stopping system 112 cannot be reliably activated and may prioritize the use of the primary stopping system 106 whenever possible.

The computer system 100 determines that a fault 404 is present in the secondary stopping system 112 if either the system status 400 indicates that braking requests cannot be executed or if a sensor fault or communication loss 402 prevents accurate control of the braking components. Upon detection of a fault 404, the computer system 100 may adjust braking actions accordingly, ensuring that the vehicle 104 remains capable of stopping safely despite potential limitations in the secondary stopping system 112.

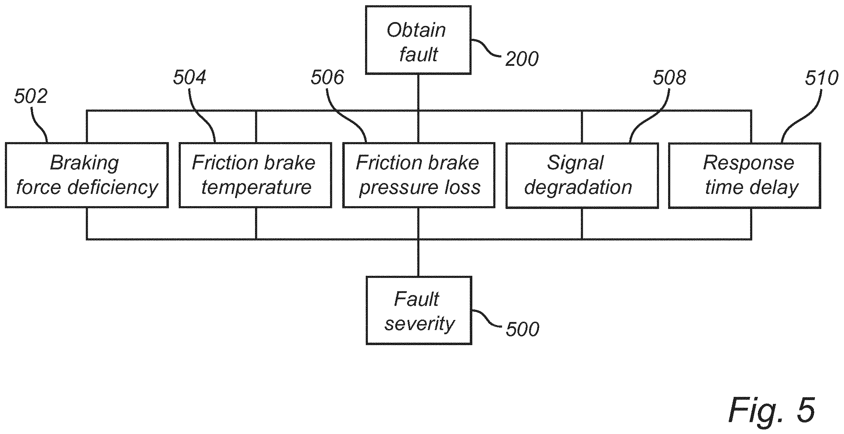

The computer system 100 is configured to classify a detected fault into the first predefined group of faults 202, the second predefined group of faults 204, or the third predefined group of faults 206 based on at least one predefined threshold value associated with a severity parameter 500 of the fault, as illustrated in Fig. 5. The severity parameter 500 may be selected from at least one of a measured or estimated braking force deficiency 502, an estimated temperature of the friction brakes 504, a degree of pressure loss in the friction brakes 506, a degree of communication signal degradation between braking components 508, and a response time delay between a braking request and detected vehicle deceleration 510.

The braking force deficiency 502 may be determined by comparing the expected braking force output with the actual measured response of the primary stopping system 106. If the detected braking force is lower than an expected threshold, the system may classify the fault accordingly and determine whether activation of the secondary stopping system 112 is necessary. The temperature of the friction brakes 504 may be monitored using dedicated temperature sensors or estimated based on braking duration and intensity. If the temperature exceeds a predefined threshold, the system may classify the fault in a way that prevents further degradation of the braking components, such as by activating the propulsion inhibition system 116 to assist in slowing the vehicle 104.

The degree of pressure loss in the friction brakes 506 may be detected through sensors monitoring the braking system's hydraulic or pneumatic circuits. A sudden or gradual pressure loss may indicate a failure that reduces braking effectiveness, prompting the system to classify the fault accordingly and apply compensatory braking actions. Communication signal degradation 508 may refer to weakened, delayed, or intermittent signals exchanged between braking system components, such as loss of CAN or Ethernet communication with the transmission control unit 110 or parking brake actuators. If communication degradation reaches a predefined threshold, the system may classify the fault as severe enough to require switching to the secondary stopping system 112.

The response time delay 510 between a braking request and detected vehicle deceleration may indicate potential inefficiencies or failures within the braking system. If the time delay exceeds a predefined limit, the computer system 100 may classify the fault accordingly and determine whether additional braking measures should be taken. By evaluating faults based on severity parameters 500 and predefined thresholds, the computer system 100 ensures that braking actions are dynamically adjusted to match the criticality of detected faults, improving overall braking efficiency and vehicle safety.

The computer system 100 classifies faults into predefined groups based on the type and severity of the detected issue, as illustrated in Figs. 2 and 5. The first predefined group of faults 202 includes faults indicative of reduced or lacking functionality of the friction brakes 108 of the primary stopping system 106 and/or reduced or lacking functionality of the propulsion inhibition system 116 of the secondary stopping system 112. Such faults may be identified based on severity parameters 500, such as braking force deficiency 502 or friction brake pressure loss 506, which indicate that the friction brakes 108 are not providing the expected deceleration. If the propulsion inhibition system 116 is also found to be ineffective, for example due to a signal degradation 508 preventing reliable activation, the fault is classified accordingly.

The second predefined group of faults 204 includes faults indicative of reduced or lacking functionality of the friction brakes 108 of the primary stopping system 106 and/or a fault in the transmission control unit 110 of the primary stopping system 106. As shown in Fig. 2, the transmission control unit 110 is responsible for managing driveline disengagement, and if a fault prevents the clutch from disengaging, the braking force alone may not be sufficient to stop the vehicle 104. The system may classify such faults based on response time delay 510, where an excessive delay in deceleration following a braking request suggests that propulsion forces are still active. In such cases, switching to the secondary stopping system 112 ensures that braking effectiveness is maintained.

The third predefined group of faults 206 includes faults indicative of a fault in the transmission control unit 110 of the primary stopping system 106 and/or a fault in the parking brake system 114 of the secondary stopping system 112. If the transmission control unit 110 fails to disengage the driveline, or if the parking brake system 114 cannot reliably engage due to a sensor fault 402 or system status 400, as shown in Fig. 4, the system may determine that neither the primary nor the secondary stopping system can operate as intended. In such cases, the computer system 100 may classify the fault as requiring an alternative braking approach, such as relying on the friction brakes 108 in combination with propulsion inhibition system 116 to achieve a controlled stop. By organizing faults into these predefined groups, the system ensures that each fault scenario is addressed with an appropriate braking response, improving overall fault tolerance and stopping reliability.

The computer system 100 may determine that the primary stopping system 106 is unable to accept external braking requests due to insufficient air pressure, as indicated by the system status 300 in Fig. 3. Pneumatic braking systems rely on sufficient air pressure to actuate the friction brakes 108, and a loss of pressure may be caused by a leak, compressor failure, or other system malfunction, and hydraulic braking systems function in an analog manner. If the system status 300 indicates that braking is not possible due to this condition, the computer system 100 activates the parking brake system 114 of the secondary stopping system 112 to bring the vehicle 104 to a stop, as illustrated in Fig. 2. Since the parking brake system 114 is designed to engage automatically when air pressure is lost, this ensures a fail-safe stopping mechanism even when the primary stopping system 106 is unavailable.

If the computer system 100 determines that the primary stopping system 106 allows only reduced braking force due to an overheating condition 304 of the friction brakes 108, as shown in Fig. 3, it may activate the propulsion inhibition system 116 of the secondary stopping system 112 to assist in vehicle deceleration. Overheating of the friction brakes 108 may be detected based on direct temperature measurements or an estimation model that tracks brake usage and cooling time, as described in Fig. 5 with reference to the friction brake temperature 504. To prevent further overheating and maintain braking effectiveness, the computer system 100 engages the propulsion inhibition system 116, cutting engine power and reducing the force that must be counteracted by the friction brakes 108. This ensures that braking performance is not compromised by excessive heat buildup while still achieving the necessary deceleration.

If a communication loss 306 occurs between a brake request unit and the primary stopping system 106, as indicated in Fig. 3, the computer system 100 determines whether the vehicle 104 is already decelerating. Communication loss may result from a failure in the CAN or Ethernet communication links, preventing the braking system from receiving commands or transmitting status updates. To ensure that braking is still effective, the computer system 100 monitors the vehicle's deceleration. If no sufficient deceleration is detected within a predefined time period, the computer system 100 activates the parking brake system 114 of the secondary stopping system 112, as illustrated in Fig. 2. This prevents uncontrolled vehicle motion in cases where the communication failure has resulted in a loss of braking functionality.

If the clutch position sensor of the transmission control unit 110 is faulty and the transmission cannot disengage, as shown in Fig. 2, the computer system 100 determines that propulsion forces may continue to drive the vehicle 104 even if braking is applied. In such cases, the propulsion inhibition system 116 of the secondary stopping system 112 is activated to cut power to the engine management system, ensuring that no further torque is transmitted to the wheels. However, if the vehicle 104 is still moving after a predefined time period, the computer system 100 also activates the parking brake system 114 to bring the vehicle to a complete stop. This prevents situations where the engine continues to drive the vehicle due to a failure in the transmission control unit 110, ensuring that stopping can still be achieved reliably.

If a failure in the parking brake system 114 of the secondary stopping system 112 is detected, as illustrated in Fig. 4, the computer system 100 determines whether the friction brakes 108 of the primary stopping system 106 remain functional. The failure of the parking brake system 114 may be due to an actuator fault, mechanical failure, or loss of communication 402, preventing the secondary stopping system 112 from engaging. If the friction brakes 108 are still functional, the computer system 100 uses the friction brakes 108 in combination with the propulsion inhibition system 116 to bring the vehicle 104 to a stop. This ensures that a braking action can still be performed even if the parking brake system 114 is unavailable.

If the primary stopping system 106 applies a braking request, but the resulting vehicle deceleration is below a predefined expected threshold, the computer system 100 determines that the braking action is not producing the intended effect. As shown in Fig. 5, this may be assessed based on response time delay 510, where a significant delay between the braking request and actual deceleration indicates a loss of braking effectiveness. To verify that the primary stopping system 106 is actively applying brake force, the computer system 100 may analyze braking force deficiency 502 and friction brake pressure loss 506. If it is determined that the applied brake force does not produce the expected deceleration, the computer system 100 activates the secondary stopping system 112, as illustrated in Fig. 2. This ensures that braking performance is maintained even when the primary stopping system 106 fails to achieve the desired stopping effect.

The computer system 100 may further control the propulsion inhibition system 116 of the secondary stopping system 112 to ensure that engine power is reliably cut off when necessary. As illustrated in Fig. 2, the propulsion inhibition system 116 is configured to disable the engine management system by opening an electrical relay that requires an active signal to remain closed. This fail-safe design ensures that if a fault occurs in the control system or if power to the relay is lost, the relay will automatically open, cutting power to the engine management system and preventing further propulsion. By using a relay that defaults to an open state, the system ensures that propulsion inhibition remains effective even in cases of signal failure or power loss, improving the overall reliability of the stopping process.

To engage the parking brake system 114 of the secondary stopping system 112, the computer system 100 may control one or more park brake valves to evacuate air from a park brake circuit, as shown in Fig. 2. When the air is evacuated, the parking brakes are mechanically engaged, applying braking force to the vehicle 104. This design ensures that the parking brakes 114 fail to a safe state, meaning that in the event of an air supply failure, the brakes will automatically engage, preventing unintended vehicle movement. The computer system 100 can actively trigger this process when a fault is detected in the primary stopping system 106 or when additional braking force is required to stop the vehicle.

The computer system 100 may obtains data indicative of a fault in at least one of the primary stopping system 106 and the secondary stopping system 112 in response to a braking request, as illustrated in Fig. 3 and Fig. 4. Instead of continuously monitoring for faults, the system performs a targeted fault check whenever a braking request is issued, ensuring that any detected malfunction is immediately considered in the braking response. This approach optimizes system efficiency by focusing diagnostic efforts on critical moments while reducing unnecessary processing. If a fault is detected at the time of the braking request, the computer system 100 determines whether the requested braking action can be performed or if the braking strategy must be adjusted.

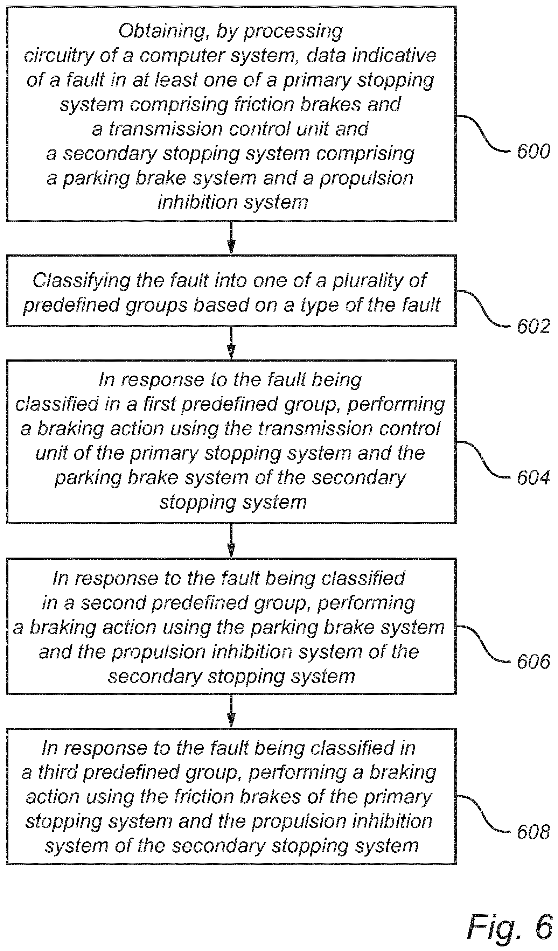

Fig. 6 is a flow chart of a computer-implemented method for controlling stopping systems of a vehicle. The method comprises obtaining 600, by processing circuitry 102 of a computer system 100, data indicative of a fault in at least one of a primary stopping system 106 comprising friction brakes 108 and a transmission control unit 110, and a secondary stopping system 112 comprising a parking brake system 114 and a propulsion inhibition system 116. The method further comprises classifying 602 the fault into one of a plurality of predefined groups of faults, including a first predefined group of faults 202, a second predefined group of faults 204, and a third predefined group of faults 206, based on a type of the fault.

In response to the fault being classified in the first predefined group of faults 202, the method comprises performing 604 a braking action using the transmission control unit 110 of the primary stopping system 106 and the parking brake system 114 of the secondary stopping system 112. In response to the fault being classified in the second predefined group of faults 204, the method comprises performing 606 a braking action using the parking brake system 114 and the propulsion inhibition system 116 of the secondary stopping system 112. In response to the fault being classified in the third predefined group of faults 206, the method comprises performing 608 a braking action using the friction brakes 108 of the primary stopping system 106 and the propulsion inhibition system 116 of the secondary stopping system 112.

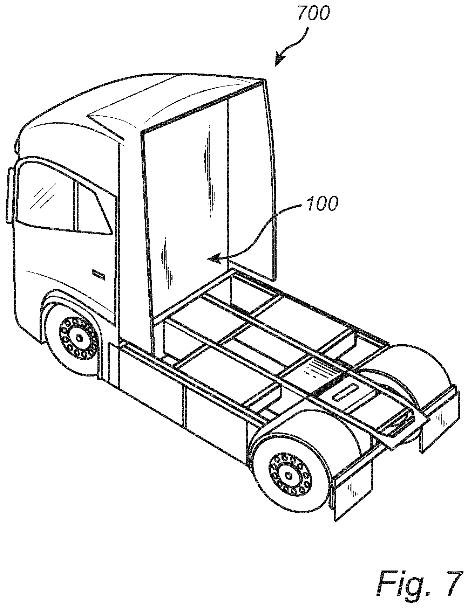

The vehicle 700, as illustrated in Fig. 7, comprises the computer system 100 as described in any of the above examples. The vehicle 700 further comprises a primary stopping system 106 comprising friction brakes 108 and a transmission control unit 110, and a secondary stopping system 112 comprising a parking brake system 114 and a propulsion inhibition system 116. The computer system 100 is communicatively coupled to both the primary stopping system 106 and the secondary stopping system 112 via a communication protocol selected from Controller Area Network (CAN), Ethernet, or a similar vehicle communication protocol. The communication protocol enables the computer system 100 to receive operational data, detect faults, and execute braking actions as required to ensure safe and reliable stopping of the vehicle 700 under various fault conditions.

Fig. 7 is a schematic diagram of a computer system 100 comprising processing circuitry 102 for implementing examples disclosed herein. The computer system 100 is adapted to execute instructions from a computer-readable medium to perform these and/or any of the functions or processing described herein. The computer system 100 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 100 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 100 may comprise at least one computing device or electronic device capable of including firmware, hardware, and/or executing software instructions to implement the functionality described herein. The computer system 100 may include processing circuitry 102 (e.g., processing circuitry including one or more processor devices or control units), a memory 804, and a system bus 806. The computer system 100 may include at least one computing device having the processing circuitry 802. The system bus 806 provides an interface for system components including, but not limited to, the memory 804 and the processing circuitry 802. The processing circuitry 102 may include any number of hardware components for conducting data or signal processing or for executing computer code stored in memory 804. The processing circuitry 102 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 102 may further include computer executable code that controls operation of the programmable device.

The system bus 806 may be any of several types of bus structures that may further interconnect to a memory bus (with or without a memory controller), a peripheral bus, and/or a local bus using any of a variety of bus architectures. The memory 804 may be one or more devices for storing data and/or computer code for completing or facilitating methods described herein. The memory 804 may include database components, object code components, script components, or other types of information structure for supporting the various activities herein. Any distributed or local memory device may be utilized with the systems and methods of this description. The memory 804 may be communicably connected to the processing circuitry 102 (e.g., via a circuit or any other wired, wireless, or network connection) and may include computer code for executing one or more processes described herein. The memory 804 may include non-volatile memory 808 (e.g., read-only memory (ROM), erasable programmable read-only memory (EPROM), electrically erasable programmable read-only memory (EEPROM), etc.), and volatile memory 810 (e.g., random-access memory (RAM)), or any other medium which can be used to carry or store desired program code in the form of machine-executable instructions or data structures and which can be accessed by a computer or other machine with processing circuitry 802. A basic input/output system (BIOS) 812 may be stored in the non-volatile memory 808 and can include the basic routines that help to transfer information between elements within the computer system 800.

The computer system 100 may further include or be coupled to a non-transitory computer-readable storage medium such as the storage device 814, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 814 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 814 and/or in the volatile memory 810, which may include an operating system 816 and/or one or more program modules 818. All or a portion of the examples disclosed herein may be implemented as a computer program 820 stored on a transitory or non-transitory computer-usable or computer-readable storage medium (e.g., single medium or multiple media), such as the storage device 814, which includes complex programming instructions (e.g., complex computer-readable program code) to cause the processing circuitry 102 to carry out actions described herein. Thus, the computer-readable program code of the computer program 820 can comprise software instructions for implementing the functionality of the examples described herein when executed by the processing circuitry 802. In some examples, the storage device 814 may be a computer program product (e.g., readable storage medium) storing the computer program 820 thereon, where at least a portion of a computer program 820 may be loadable (e.g., into a processor) for implementing the functionality of the examples described herein when executed by the processing circuitry 802. The processing circuitry 102 may serve as a controller or control system for the computer system 100 that is to implement the functionality described herein.

The computer system 100 may include an input device interface 822 configured to receive input and selections to be communicated to the computer system 100 when executing instructions, such as from a keyboard, mouse, touch-sensitive surface, etc. Such input devices may be connected to the processing circuitry 102 through the input device
interface 822 coupled to the system bus 806 but can be connected through other interfaces, such as a parallel port, an Institute of Electrical and Electronic Engineers (IEEE) 1394 serial port, a Universal Serial Bus (USB) port, an IR interface, and the like. The computer system 100 may include an output device interface 824 configured to forward output, such as to a display, a video display unit (e.g., a liquid crystal display (LCD) or a cathode ray tube (CRT)). The computer system 100 may include a communications interface 826 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1. A computer system (100) comprising processing circuitry (102) configured to: in a vehicle (104) having a primary stopping system (106) comprising friction brakes (108) and a transmission control unit (110), and a secondary stopping system (112) comprising a parking brake system (114) and a propulsion inhibition system (116), obtain (200) data indicative of a fault in at least one of the primary stopping system and the secondary stopping system; in response to the fault being one of a group of faults included in a first predefined group of faults (202), perform a braking action using the transmission control unit of the primary stopping system and the parking brake system of the secondary stopping system; in response to the fault being one of a group of faults included in a second predefined group of faults (204), perform a braking action using the parking brake system and the propulsion inhibition system of the secondary stopping system; and in response to the fault being one of a group of faults included in a third predefined group of faults (206), perform a braking action using the friction brakes of the primary stopping system and the propulsion inhibition system of the secondary stopping system.

Example 2. The computer system of example 1, wherein the data indicative of a fault (308) in the primary stopping system includes at least one of: a system status (300) of the primary stopping system; a degradation state (302) of the primary stopping system, an overheating condition (304) of the primary stopping system, and a sensor fault (306) or communication loss associated with the primary stopping system.

Example 3. The computer system of example 1 or 2, wherein the data indicative of a fault (404) in the secondary stopping system includes at least one of: a system status (400) of the secondary stopping system; a sensor fault or communication loss (402) associated with the secondary stopping system.

Example 4. The computer system of any one of the preceding examples, wherein a classification of the fault as being in the first predefined group of faults, the second predefined group of faults or the third predefined group of faults is based on at least one predefined threshold value associated with a severity parameter (500) of the fault, the severity parameter being selected from at least one of: a measured or estimated braking force deficiency (502); an estimated temperature of the friction brakes (504); a degree of pressure loss in the friction brakes (506); a degree of communication signal degradation between braking components (508), and a response time delay between a braking request and detected vehicle deceleration (510).

Example 5. The computer system of any of the preceding examples, wherein the first predefined group of faults includes faults indicative of reduced or lacking functionality of the friction brakes of the primary stopping system and/or reduced or lacking functionality of the propulsion inhibition system of the secondary stopping system.

Example 6. The computer system of any of the preceding examples, wherein the second predefined group of faults includes faults indicative of reduced or lacking functionality of the friction brakes of the primary stopping system and/or a fault in the transmission control unit of the primary stopping system.

Example 7. The computer system of any of the preceding examples, wherein the third predefined group of faults includes faults indicative of a fault in the transmission control unit of the primary stopping system and/or a fault in the parking brake system of the secondary stopping system.

Example 8. The computer system of any of the preceding examples, wherein in response to detecting that the primary stopping system reports a system status indicating that an external braking requests are not accepted due to insufficient air pressure, the processing circuitry (102) is configured to activate the parking brake system of the secondary stopping system to bring the vehicle to a stop.

Example 9. The computer system of any of the preceding examples, wherein in response to determining that the primary stopping system allows only reduced braking force due to an overheating condition of the friction brakes, the processing circuitry (102) is configured to activate the propulsion inhibition system of the secondary stopping system if additional deceleration is required beyond the allowable braking force range.

Example 10. The computer system of any of the preceding examples, wherein in response to detecting a communication loss between a brake request unit and the primary stopping system, the processing circuitry (102) is configured to: determine whether the vehicle is already decelerating; and in response to determining that no sufficient deceleration is detected within a predefined time period, activate the parking brake system of the secondary stopping system.

Example 11. The computer system of any of the preceding examples, wherein in response to detecting that a clutch position sensor of the transmission control unit is faulty and the transmission cannot disengage, the processing circuitry (102) is configured to: activate the propulsion inhibition system of the secondary stopping system to cut power to the engine management system; and activate the parking brake system if the vehicle is still moving after a predefined time period.

Example 12. The computer system of any of the preceding examples, wherein in response to detecting a failure in the parking brake system of the secondary stopping system, the processing circuitry (102) is configured to: determine whether the friction brakes of the primary stopping system are functional; and in response to determining that the friction brakes are functional, use the friction brakes and the propulsion inhibition system to stop the vehicle.

Example 13. The computer system of any of the preceding examples, wherein in response to detecting that the primary stopping system has applied a braking request but the resulting vehicle deceleration is below a predefined expected threshold, the processing circuitry (102) is configured to: verify that the primary stopping system is actively applying brake force, and in response to determining that the applied brake force does not produce the expected deceleration, activate the secondary stopping system.

Example 14. The computer system of any of the preceding examples, wherein the propulsion inhibition system of the secondary stopping system is configured to cut power to an engine management system (EMS) by opening an electrical relay that requires an active signal to remain closed.

Example 15. The computer system of any of the preceding examples, wherein activating the parking brake system of the secondary stopping system comprises opening one or more park brake valves to evacuate air from a park brake circuit, thereby applying braking force to the vehicle.

Example 16. The computer system of any of the preceding examples, wherein the processing circuitry (102) is configured to obtain data indicative of a fault in at least one of the primary stopping system and the secondary stopping system in response to a braking request.

Example 17. A vehicle (700) comprising the computer system of any of examples 1 to 16.

Example 18. A computer-implemented method, comprising: obtaining (600), by processing circuitry (102) of a computer system (104), data indicative of a fault in at least one of a primary stopping system (106) comprising friction brakes (108) and a transmission control unit (110), and a secondary stopping system (112) comprising a parking brake system (114) and a propulsion inhibition system (116); classifying (602) the fault into one of a plurality of predefined groups of faults (202, 204, 206) based on a type of the fault; in response to the fault being classified in a first predefined group of faults (202), performing (604) a braking action using the transmission control unit of the primary stopping system and the parking brake system of the secondary stopping system; in response to the fault being classified in a second predefined group of faults (204), performing (606) a braking action using the parking brake system and the propulsion inhibition system of the secondary stopping system; and in response to the fault being classified in a third predefined group of faults (206), performing (608) a braking action using the friction brakes of the primary stopping system and the propulsion inhibition system of the secondary stopping system.

Example 19. A computer program product comprising program code for performing, when executed by the processing circuitry, the method of example 18.

Example 20. A non-transitory computer-readable storage medium comprising instructions, which when executed by the processing circuitry, cause the processing circuitry to perform the method of example 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) comprising processing circuitry (102) configured to:
in a vehicle (104) having a primary stopping system (106) comprising friction brakes (108) and a transmission control unit (110), and a secondary stopping system (112) comprising a parking brake system (114) and a propulsion inhibition system (116), obtain (200) data indicative of a fault in at least one of the primary stopping system and the secondary stopping system;
in response to the fault being one of a group of faults included in a first predefined group of faults (202), perform a braking action using the transmission control unit of the primary stopping system and the parking brake system of the secondary stopping system;
in response to the fault being one of a group of faults included in a second predefined group of faults (204), perform a braking action using the parking brake system and the propulsion inhibition system of the secondary stopping system; and
in response to the fault being one of a group of faults included in a third predefined group of faults (206), perform a braking action using the friction brakes of the primary stopping system and the propulsion inhibition system of the secondary stopping system.

2. The computer system of claim 1, wherein the data indicative of a fault (308) in the primary stopping system includes at least one of:
a system status (300) of the primary stopping system;
a degradation state (302) of the primary stopping system,
an overheating condition (304) of the primary stopping system, and
a sensor fault (306) or communication loss associated with the primary stopping system.

3. The computer system of claim 1 or 2, wherein the data indicative of a fault (404) in the secondary stopping system includes at least one of:
a system status (400) of the secondary stopping system;
a sensor fault or communication loss (402) associated with the secondary stopping system.

4. The computer system of any one of the preceding claims, wherein a classification of the fault as being in the first predefined group of faults, the second predefined group of faults or the third predefined group of faults is based on at least one predefined threshold value associated with a severity parameter (500) of the fault, the severity parameter being selected from at least one of:
a measured or estimated braking force deficiency (502);
an estimated temperature of the friction brakes (504);
a degree of pressure loss in the friction brakes (506);
a degree of communication signal degradation between braking components (508), and
a response time delay between a braking request and detected vehicle deceleration (510).

5. The computer system of any of the preceding claims, wherein the first predefined group of faults includes faults indicative of reduced or lacking functionality of the friction brakes of the primary stopping system and/or reduced or lacking functionality of the propulsion inhibition system of the secondary stopping system.

6. The computer system of any of the preceding claims, wherein the second predefined group of faults includes faults indicative of reduced or lacking functionality of the friction brakes of the primary stopping system and/or a fault in the transmission control unit of the primary stopping system.

7. The computer system of any of the preceding claims, wherein the third predefined group of faults includes faults indicative of a fault in the transmission control unit of the primary stopping system and/or a fault in the parking brake system of the secondary stopping system.

8. The computer system of any of the preceding claims, wherein in response to detecting that the primary stopping system reports a system status indicating that an external braking requests are not accepted due to insufficient air pressure, the processing circuitry (102) is configured to activate the parking brake system of the secondary stopping system to bring the vehicle to a stop.

9. The computer system of any of the preceding claims, wherein in response to determining that the primary stopping system allows only reduced braking force due to an overheating condition of the friction brakes, the processing circuitry (102) is configured to activate the propulsion inhibition system of the secondary stopping system if additional deceleration is required beyond the allowable braking force range.

10. The computer system of any of the preceding claims, wherein in response to detecting a communication loss between a brake request unit and the primary stopping system, the processing circuitry (102) is configured to:
determine whether the vehicle is already decelerating; and
in response to determining that no sufficient deceleration is detected within a predefined time period, activate the parking brake system of the secondary stopping system.

11. The computer system of any of the preceding claims, wherein in response to detecting that a clutch position sensor of the transmission control unit is faulty and the transmission cannot disengage, the processing circuitry (102) is configured to:
activate the propulsion inhibition system of the secondary stopping system to cut power to the engine management system; and
activate the parking brake system if the vehicle is still moving after a predefined time period.

12. A vehicle (700) comprising the computer system of any of claims 1 to 11.

13. A computer-implemented method, comprising:
obtaining (600), by processing circuitry (102) of a computer system (104), data indicative of a fault in at least one of a primary stopping system (106) comprising friction brakes (108) and a transmission control unit (110), and a secondary stopping system (112) comprising a parking brake system (114) and a propulsion inhibition system (116);
classifying (602) the fault into one of a plurality of predefined groups of faults (202, 204, 206) based on a type of the fault;
in response to the fault being classified in a first predefined group of faults (202), performing (604) a braking action using the transmission control unit of the primary stopping system and the parking brake system of the secondary stopping system;
in response to the fault being classified in a second predefined group of faults (204), performing (606) a braking action using the parking brake system and the propulsion inhibition system of the secondary stopping system; and
in response to the fault being classified in a third predefined group of faults (206), performing (608) a braking action using the friction brakes of the primary stopping system and the propulsion inhibition system of the secondary stopping system.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.
